# EUROPEAN PATENT APPLICATION

(11) **EP 4 120 578 A1**
(43) Date of publication of application: **18.01.2023**
(21) Application number: 22182234.9
(22) Date of filing: 30.06.2022
(51) Int. Cl.: H04B 7/024, H04B 7/06, H04J 11/00

(54) **BEAM OPTIMIZATION BASED ON SIGNAL MEASUREMENTS IN NEIGHBORING CELLS**

(30) Priority: 15.07.2021 EP 21185931
(71) Applicant: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: DAS, Kallol, 2742 NL Pijnacker (NL); LITJENS, Remco, 2352 VH Voorschoten (NL); JANEIRO HORTA DE MORAIS, Joao Alberto, 1170-289 Lisbon (PT); ZHANG, Haibin, 2274 EA Voorburg (NL)
(74) Representative: Wuyts, Koenraad Maria

(57) **Abstract**

A system (1) is configured to obtain an estimated degree of interference for each of a plurality of beams (103-105,107-109). The estimated degrees of interference are determined based on properties of received signals transmitted by a transmitter in the first cell (101) using the plurality of beams. The signals have been received by mobile devices (11) while in the serving area of at least one second cell (111). The system is further configured to take a decision, based on the estimated degrees of interference, whether to avoid usage of one or more beams and/or whether to adjust one or more beams, which are transmitted in a spectrum shared by the cells, determine a set of beams in accordance with the decision, and cause the transmitter to use the set of beams to transmit wireless signals to mobile devices (31,32) in the first cell.

## Description

### FIELD OF THE INVENTION

The invention relates to a system for determining a set of beams for transmitting wireless signals to a plurality of mobile devices in a first cell, a system for determining an estimated degree of interference for each of a plurality of beams, a network unit for aggregating properties, and a mobile device for measuring properties of signals transmitted in the first cell while in the serving area of a second cell.

The invention further relates to a method of determining a set of beams for transmitting wireless signals to a plurality of mobile devices in a first cell, a method of determining an estimated degree of interference for each of a plurality of beams, a method of aggregating properties of signals transmitted in the first cell, and a method of measuring the properties.

The invention also relates to computer program products enabling a computer system to perform such methods.

### BACKGROUND OF THE INVENTION

To meet the ever-increasing traffic demands, future cellular networks need denser network deployments in order to increase the traffic handling capacity per square kilometer. Future networks may include small cell deployments within the coverage area of a macro-cell, to support a traffic hot spot or to provide coverage where the macro-cell does not provide adequate coverage. Moreover, due to heterogeneity of future communication services and due to growing cellular densification, the traffic characteristics (load, spatial distribution) of the cells may become more variable over time.

The overlapping service areas of macro- and small cells, and the growing spatial-temporal variations in traffic loads require adaptive resource management to enable resource-efficient traffic handling. In order to make efficient use of resources, frequency resources should be shared by the macro- and small cells. However, as a result, there may be interference between neighboring cells.

A straightforward way of avoiding interference between neighboring cells is not to share frequency resources at all, as done in 1G/2G networks, which apply remote frequency reuse. This is known to be resource inefficient. An alternative, more resource-efficient way is to allow frequency reuse but separate the transmission in the time (rather than spectrum) domain. This is done in contemporary networks by using so-called 'almost blank subframes', i.e., time instances where one cell refrains from using a given frequency resource to allow interference-free use of that resource in a neighboring cell. This temporal 'silencing' of the spectrum is also not the most efficient approach.

CoMP (Coordinated MultiPoint) is a collection of features developed to enhance cell edge performance in 4G networks. One of the CoMP flavors is 'coordinated scheduling', which is about coordinating the transmission decisions of neighboring eNBs in order to limit inter-cell interference levels. In its simplest case, coordinated scheduling dynamically prevents transmission at a certain time-frequency resource (referred to as 'dynamic point blanking'), while in a more advanced case, it can also involve dynamically adjusting the transmit power ('coordinated power control') or dynamically adjusting the transmission direction ('coordinated beamforming') for specific resources.

However, coordinated scheduling normally requires the involved eNBs to be connected via ideal (high-capacity, low-latency) backhauling in order to achieve the aimed gains, since it requires inter-eNB coordination at a fine time scale as up-to-date cell information needs to be shared. In many cases, e.g., when the macro- and small cells are owned by different operators, ideal backhauling (without capacity and latency constraints) between macro-cells and underlying small cells is not feasible, and resource management needs to be done at a relatively coarse timescale in so far it involves inter-cell interaction.

In the paper titled "Centralized Resource Coordination Scheme for Inter-eNB CoMP with Non-ideal Backhaul" by Jinyoung Oh, Hyo-Jin Lee, Sung Hwan Won, Younsun Kim, and Juho Lee, in IEEE Globecom Workshops, 2014, the authors have proposed a two-step centralized resource allocation scheme for inter-eNB CoMP with non-ideal backhaul. In the first step, a central coordinator decides on the resource allocation and forwards this to the cooperating cells. The allocation decision is based on collected information, e.g., channel state information measured and reported by the UEs. In the second step, the involved eNBs perform user scheduling and link adaptation on the allocated resources.

In the scheme proposed by Jinyoung Oh et al., interference is reduced by allocating resources in such a way that simultaneous transmission by neighboring eNBs in the same frequency resource is avoided if this was detected to have caused interference in the past. However, in many cases, the benefit of this relatively crude interference reduction does not outweigh the drawback of reducing resource sharing between neighboring cells.

### SUMMARY OF THE INVENTION

It is a first objective of the invention to provide systems and devices, which are able to help reduce interference between neighboring cells which share resources while ensuring that the shared resources are used efficiently.

It is a second objective of the invention to provide methods, which can be used to help reduce interference between neighboring cells which share resources while ensuring that the shared resources are used efficiently.

In a first aspect of the invention, a system for determining a set of beams for transmitting wireless signals to a plurality of mobile devices in a first cell comprises at least one processor configured to obtain an estimated degree of interference for each of a plurality of beams, the estimated degrees of interference being determined based on properties of received signals transmitted by a transmitter in the first cell using the plurality of beams, the received signals being received by a second plurality of mobile devices while in the serving area of at least one second cell, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell.

By estimating degrees of interference based on properties, e.g. signal strengths, of received signals, e.g., reference signals such as SSB and/or CSI-RS references signals of 5G New Radio (NR), transmitted in a first cell and received by mobile devices while in the serving area of at least one (neighboring) second cell, and conducting beam management in the first cell based on these estimated degrees of interference, interference may be reduced without unnecessarily limiting spectrum sharing, even if the backhaul between the cells is non-ideal. In the scheme proposed by Jinyoung Oh et al., no information is collected and shared at the level of beams.

The set of beams is normally determined based on feedback from the first plurality of mobile devices (i.e., the mobile devices served by the first cell) to the plurality of beams (e.g., SSB and/or CSI-RS beams, which may or may not have been previously adjusted). However, in dependence on the decision, the beam characteristics that would normally be used may need to be adjusted, e.g., by reducing transmission power and/or by adjusting beam width and/or beam direction. Determining the set of beams thus comprises determining the beam characteristics (e.g., transmit power) for the set of beams. In 5G, it is especially beneficial to determine PDSCH beams with adjusted beam characteristics, as potential interference is mostly caused by the PDSCH beams. These PDSCH beams are derived from the beams that carry the reference signals. Reference signals, e.g., SSB and/or CSI-RS of 5G NR, may continue to be transmitted in the direction of the original plurality of beams, although it is also possible to adjust or silence beams that carry reference signals.

A beam of the determined set of beams, typically the beams used for actual data transmission, may have the same precoder as a beam of the plurality of beams (over which the reference signals are transmitted) or may have a different precoder, as signaled by the mobile device in the first cell via PMI feedback. In other words, the PMI feedback may suggest a different precoder (different from those used for the plurality of beams, i.e., the measured beams) to be used for data transmission (e.g., PDSCH). To prevent that the use of another precoder conflicts with a decision to adjust the beam direction and/or beam width of one or more beams, certain (ranges of) transmission directions may be marked as needing to be avoided based on the transmission directions of the measured beams that potentially cause interference.

The system may be a resource management system, for example. The transmitter may be a beamforming transmitter, for example. The first cell may be a macro cell and each of the at least one second cell may be a small cell, for example. The decision may be more specific or less specific. An example of a decision that is more specific is a decision to use a certain beam with certain beam characteristics to transmit PDSCH data to a certain mobile device while it is at its current location. An example of a decision that is less specific is a decision not to use beams in a certain range of transmission directions or not to use beams in a certain range of transmission directions with more than a certain amount of transmit power. If the decision is less specific, sets of beams may be determined multiple times (at different time instances) according to the same (less specific) decision. Within the same 'less specific' decision, different 'more specific' decisions may be made at different times. In both cases, the decision made at a given time instance will last for some time until the instance at which the decision is reconsidered, but if the decision is more specific it will normally last for a shorter time than if the decision is less specific. The decision affects whatever devices the first cell may be serving during that time.

The estimated degrees of interference may be determined based on received signal strengths (e.g., RSSI) of the reference signals, for example.

The calculation of the estimated degrees of interference may take into account estimated or measured loads on the further plurality of beams (i.e., the serving beams in the second cell(s)). By taking into account estimated or measured loads, the interference impact may be taken into account better. The at least one processor may be configured to determine the estimated degrees of interference further based on loads on a further plurality of beams associated with the received signals, the further plurality of beams being transmitted in the shared spectrum by at least one second transmitter in the at least one second cell and being received by the second plurality of mobile devices in the at least one second cell.

If loads are not taken into account in the calculation of the estimated degrees of interference, this does not mean that the loads are assumed to be zero. In this case, the estimated degree of interference is merely an estimated degree of potential interference, as due to the unpredictability of traffic, there might not be any traffic in the at least one second cell that could experience interference from beams transmitted to mobile devices in the first cell. By taking into account estimated or measured loads, the significance/relevance of this potential interference is quantified.

The at least one processor may be configured to obtain information indicative of the signal strengths of the received signals and determine the estimated degree of interference for each of the plurality of beams (i.e., of the first cell) based on the signal strengths, and optionally based on the loads. In this case, the system obtains information indicative of signal strengths and processes the signal strengths itself. Alternatively, the processing of the signal strengths may be performed by another system, e.g., by a dedicated processing system.

The system may comprise a base station or may be comprised in a base station, the base station comprising the transmitter. Alternatively, the system may be a system separate from the base station and transmit commands to the base station to cause the transmitter of this base station to use the determined set of beams to transmit the wireless signals to the plurality of mobile devices in the first cell.

The at least one processor may be configured to obtain time-dependent estimated degrees of interference for each of the plurality of beams, select, for a certain time interval, an estimated degree of interference from the time-dependent estimated degrees of interference based on the certain time interval, and take the decision whether to avoid usage of the one or more beams of and/or whether to adjust the one or more beams with respect to the certain time interval. Time-dependent estimated degrees of interference may be obtained by obtaining time-dependent loads and determining the time-dependent estimated degrees of interference based on these time-dependent loads. The estimated degree of interference preferably depends on the load, because with a higher load, the interference impact will be higher. Since the loads are typically not only different per beam but also different per hour and per day of the week, this makes it possible to optimize beam management according to time-varying traffic profiles.

The at least one processor may be configured to take a further decision, based on the decision and/or based on the estimated degrees of interference, whether to enlarge or reduce spectrum assigned shared between the first cell and the at least one second cell, and determine the set of beams for transmitting the wireless signals to the plurality of mobile devices in the first cell further in accordance with the further decision. For example, if a relatively high degree of interference is estimated for all beams in the spectrum shared between the first cell and the at least one second cell, it may be beneficial to reduce the spectrum shared between the first cell and the at least one second cell in order to reduce interference and still serve the mobile devices in the first cell adequately. If the average received signal strength measured with respect to the first cell beams becomes a certain amount lower than before and/or the loads on the serving beams of the at least one second cell are relatively low while loads on the beams of the first cell are relatively high, the spectrum shared between the first cell and the at least one second cell may be enlarged (again). The enlargement of the shared spectrum may be temporary, as the reduction in interference may be temporary (e.g. time-dependent) as well.

Typically, the spectrum used by two cells comprises three partitions: a partition that is dedicated to the first cell, a partition that is dedicated to a second cell, and a shared partition between the first cell and the second cell. In certain situations, enlarging one partition means that another partition needs to be reduced, but this is not always the case. The further decision whether to enlarge or reduce spectrum assigned shared between the first cell and the at least one second cell may further depend on the load offered to the first cell and the load offered to the at least one second cell, and optionally by the priority levels of these loads.

The at least one processor may be configured to determine at least one level of confidence in the estimated degrees of interference and take the decision whether to avoid usage of the one or more beams and/or whether to adjust the one or more beams in dependence on the at least one level of confidence exceeding a threshold. This may be done to ensure that beam management is not based on incorrect information and/or incorrect assumptions with respect to load and/or with respect to interference.

The at least one processor may be configured to postpone the decision with respect to all beams if a confidence level in a certain estimated degree of interference, e.g., determined for a certain beam of the plurality of beams, is not sufficient. In the meantime, the beams used for data transmission are determined without using any estimated degrees of interference. Alternatively, the at least one processor may be configured to take the decision already with respect to some of the beams for which the confidence level of the estimated degree of interference exceeds the threshold.

The at least one processor may be configured to take the decision whether to avoid usage of the one or more beams and/or whether to adjust the one or more beams based on information indicative of a current traffic load in the first cell and/or of current traffic requirements in the first cell. Thus, the decisions whether to silence/attenuate beams may also depend on the first cell load on the beam and the priority/importance level of that traffic. For example, an estimation of the performance impact of taking the decision may be determined based on the current traffic load in the first cell and/or of current traffic requirements in the first cell and the decision may be taken based on this estimated performance impact. Alternatively or additionally, the decision may be reconsidered based on a measured performance impact.

In a second aspect of the invention, a system for determining an estimated degree of interference for each of a plurality of beams comprises at least one processor configured to obtain information indicative of properties of received signals transmitted by a transmitter in a first cell using the plurality of beams, the properties being measured by a second plurality of mobile devices while in the serving area of at least one second cell, determine the estimated degree of interference for each of the plurality of beams based on the properties, and transmit information indicative of the estimated degrees of interference to a system for determining a set of beams for transmitting wireless signals to a plurality of mobile devices in a first cell, wherein the system for determining the set of beams comprises at least one processor configured to obtain the estimated degrees of interference of the plurality of beams, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell. Alternatively, the system that determines the set of beams (for data transmission), e.g., a resource management system, may perform this processing. The received signals may be reference signals, for example. The properties of the received (e.g., reference) signals may be signal strengths, for example.

The at least one processor may be configured to determine at least one level of confidence in the estimated degrees of interference and transmit information indicative of the estimated degrees of interference to the system for determining the set of beams in dependence on the at least one level of confidence exceeding a threshold. If a confidence level in a certain estimated degree of interference, e.g., determined for a certain beam of the plurality of beams, is not sufficient, transmission of information indicative of the estimated degree of interference may be postponed for only this beam. Alternatively, transmission of information indicative of any estimated degree of interference may be postponed. If the confidence level in a certain estimated degree of interference is not sufficient, the system may continue to obtain properties measured by the second plurality of mobile devices.

The at least one processor may be configured to determine the estimated degrees of interference further based on loads on a further plurality of beams associated with the properties, the further plurality of beams being transmitted in the shared spectrum by at least one second transmitter in the at least one second cell and being received by the second plurality of mobile devices in the at least one second cell.

In a third aspect of the invention, a network unit for aggregating properties comprises at least one processor configured to receive, from a second plurality of mobile devices, information indicative of properties of signals transmitted by a transmitter in a first cell using a plurality of beams, the properties being measured by the second plurality of mobile devices while in the serving area of at least one second cell, aggregate the properties measured by the second plurality of mobile devices and transmit information indicative of the aggregated properties to a system for determining a set of beams for transmitting wireless signals to a plurality of mobile devices in the first cell, wherein the system for determining the set of beams comprises at least one processor configured to obtain an estimated degree of interference for each of the plurality of beams, the estimated degrees of interference being determined based on the properties of the received signals, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell. The received signals may be reference signals, for example. The properties of the received (e.g., reference) signals may be signal strengths, for example.

Alternatively, the system for determining the set of beams or the system for determining the estimated degrees of interference may perform this aggregation. The network unit may be a base station or a separate network unit, for example. Aggregating signal strengths may comprise counting what fraction of measurements of the signal strength of a first cell beam exceeds a threshold or actually taking the received signal strengths more explicitly into account (e.g., averaging or a percentile).

The at least one processor of this network unit may be configured to determine at least one level of confidence in the aggregated properties and transmit information indicative of the aggregated properties to the system for determining the set of beams or to the system for determining the estimated degrees of interference in dependence on the at least one level of confidence exceeding a threshold. If a confidence level in a certain aggregation, e.g., determined for a certain beam of the plurality of beams, is not sufficient, transmission of information indicative of the aggregation of properties may be postponed for only this beam. Alternatively, transmission of information indicative of any aggregation may be postponed. If the confidence level in a certain aggregation is not sufficient, the network unit may continue to obtain information indicative of properties from the second plurality of mobile devices.

The at least one processor of this network unit may be configured to determine loads on a further plurality of beams associated with the received signals, the further plurality of beams being transmitted in the shared spectrum by at least one second transmitter in the at least one second cell and being received by the second plurality of mobile devices in the at least one second cell, and transmit information indicative of the loads to the system for determining the set of beams or to the system for determining the estimated degree of interference. The network unit may comprise the at least one second transmitter.

In a fourth aspect of the invention, a network unit for aggregating properties comprises at least one processor configured to receive, from a second plurality of mobile devices, information indicative of properties of signals transmitted by a transmitter in a first cell using a plurality of beams, the properties being measured by the second plurality of mobile devices while in the serving area of at least one second cell, aggregate the properties measured by the second plurality of mobile devices, and transmit information indicative of the aggregated properties to a system for determining an estimated degree of interference for each of the plurality of beams, the system comprising at least one processor configured to obtain the information indicative of the properties of the received signals, determine the estimated degree of interference for each of the plurality of beams based on the properties, and transmit information indicative of the estimated degrees of interference to a system for determining a set of beams.

This system for determining the set of beams may comprise at least one processor configured to obtain an estimated degree of interference for each of the plurality of beams, the estimated degrees of interference being determined based on the properties of the received signals, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell.

In a fifth aspect of the invention, a mobile device for measuring properties of signals transmitted in a first cell while in the serving area of a second cell comprises at least one processor configured to measure, while in the serving area of the second cell, properties of signals transmitted in the first cell, the signals being transmitted by a transmitter in the first cell using a plurality of beams, and transmit information indicative of the properties to a system for determining a set of beams for transmitting wireless signals to a plurality of mobile devices in the first cell, wherein the system for determining the set of beams comprises at least one processor configured to obtain an estimated degree of interference for each of the plurality of beams, the estimated degrees of interference being determined based on properties of received signals transmitted by the transmitter in the first cell using the plurality of beams, the received signals being received by a second plurality of mobile devices while in the serving area of at least one second cell, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell. The signals may comprise reference signals. The received signals may be reference signals, for example. The properties of the received (e.g., reference) signals may be signal strengths, for example.

The reference signals may comprise SSB signals and/or CSI-RS signals in case of 5G NR, for example. The at least one processor may be configured to only transmit information indicative of a signal strength when the measured signal strength exceeds a threshold.

The at least one processor of this mobile device may be configured to temporarily connect to a base station in the first cell, receive information from the base station in the first cell, the information relating to the CSI-RS signals transmitted by the base station in the first cell, and locate the CSI-RS signals based on the received information. The information may be received from the base station in a 5G NR RRC message, for example.

In a sixth aspect of the invention, a mobile device for measuring properties of signals transmitted in a first cell while in the serving area of a second cell comprises at least one processor configured to measure, while in the serving area of the second cell, properties of signals transmitted in the first cell, the signals being transmitted by a transmitter in the first cell using a plurality of beams, and transmit information indicative of the properties to a system for determining an estimated degree of interference for each of the plurality of beams, the system comprising at least one processor configured to obtain information indicative of properties of received signals transmitted by the transmitter in the first cell using the plurality of beams, the properties being measured by a second plurality of mobile devices while in the serving area of at least one second cell, determine the estimated degree of interference for each of the plurality of beams based on the obtained properties, and transmit information indicative of the estimated degrees of interference to a system for determining a set of beams.

This system for determining the set of beams may comprise at least one processor configured to obtain an estimated degree of interference for each of the plurality of beams, the estimated degrees of interference being determined based on the properties of the received signals, take a decision, based on the estimated degrees of interference of the plurality of beams, whether to avoid usage of one or more beams and/or whether to adjust one or more beams, the one or more beams being transmitted in a spectrum shared by the first cell and the at least one second cell, determine the set of beams for transmitting the wireless signals to the plurality of mobile devices in the first cell in accordance with the decision, and cause the transmitter to use the determined set of beams to transmit the wireless signals to the plurality of mobile devices in the first cell

In a seventh aspect of the invention, a mobile device for measuring properties of signals transmitted in a first cell while in the serving area of a second cell comprises at least one processor configured to measure, while in the serving area of the second cell, properties of signals transmitted in the first cell, the signals being transmitted by a transmitter in the first cell using a plurality of beams, and transmit information indicative of the properties to a network unit for aggregating properties of signals, the network unit comprising at least one processor configured to receive, from a second plurality of mobile devices, information indicative of properties of signals transmitted by the transmitter in the first cell using the plurality of beams, the properties being measured by the second plurality of mobile devices while in the serving area of at least one second cell, aggregate the properties measured by the second plurality of mobile devices, and transmit information indicative of the aggregated properties to a system for determining estimated degrees of interference and/or determining a set of beams.

This system for determining estimated degrees of interference may comprise at least one processor configured to obtain the information indicative of the properties of the received signals, determine the estimated degree of interference for each of the plurality of beams based on the properties, and transmit information indicative of the estimated degrees of interference to a system for determining a set of beams.

In a eighth aspect of the invention, a method of determining a set of beams for transmitting wireless signals to a plurality of mobile devices in a first cell comprises obtaining an estimated degree of interference for each of a plurality of beams, the estimated degrees of interference being determined based on properties of received signals transmitted by a transmitter in the first cell using the plurality of beams, the received signals being received by a second plurality of mobile devices while in the serving areas of at least one second cell, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell. The method may be performed by software running on a programmable device. This software may be provided as a computer program product.

In the method of determining the set of beams, the estimated degrees of interference may further be determined based on loads on a further plurality of beams associated with the received signals, the further plurality of beams being transmitted in the shared spectrum by at least one second transmitter in the at least one second cell and being received by the second plurality of mobile devices in the at least one second cell.

In a ninth aspect of the invention, a method of determining an estimated degree of interference for each of a plurality of beams comprises obtaining information indicative of properties of received signals transmitted by a transmitter in a first cell using the plurality of beams, the properties being measured by a second plurality of mobile devices while in the serving area of at least one second cell, determining the estimated degree of interference for each of the plurality of beams based on the properties, and transmitting information indicative of the estimated degrees of interference to a system performing a method of determining a set of beams for transmitting wireless signals to a plurality of mobile devices in the first cell, the method of determining the set of beams comprising obtaining the estimated degree of interference for each of the plurality of beams, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell. The method may be performed by software running on a programmable device. This software may be provided as a computer program product.

In the method of determining the estimated degrees of interference, the estimated degrees of interference may further be determined based on loads on a further plurality of beams associated with the properties, the further plurality of beams being transmitted in the shared spectrum by at least one second transmitter in the at least one second cell and being received by the second plurality of mobile devices in the at least one second cell.

In a tenth aspect of the invention, a method of aggregating properties comprises receiving, from a second plurality of mobile devices, information indicative of properties of signals transmitted by a transmitter in a first cell using a plurality of beams, the properties being measured by the second plurality of mobile devices while in the serving area of at least one second cell, aggregating the properties measured by the second plurality of mobile devices, and transmitting information indicative of the aggregated properties to a system performing a method of determining a set of beams for transmitting wireless signals to a plurality of mobile devices in a first cell, the method of determining the set of beams comprising obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell. The method may be performed by software running on a programmable device. This software may be provided as a computer program product.

The method of aggregating properties may further comprise determining loads on a further plurality of beams associated with the received signals, the further plurality of beams being transmitted in the shared spectrum by at least one second transmitter in the at least one second cell and being received by the second plurality of mobile devices in the at least one second cell, and transmitting information indicative of the loads to the system for determining the set of beams or to the system for determining the estimated degree of interference.

In an eleventh aspect of the invention, a method of aggregating properties comprises receiving, from a second plurality of mobile devices, information indicative of properties of signals transmitted by a transmitter in a first cell using a plurality of beams, the properties being measured by the second plurality of mobile devices while in the serving area of at least one second cell, aggregating the properties measured by the second plurality of mobile devices, and transmitting information indicative of the aggregated properties to a system performing a method of determining an estimated degree of interference for each of a plurality of beams, the method of determining the estimated degrees of interference comprising obtaining the information indicative of the properties of the received signals, determining the estimated degree of interference for each of the plurality of beams based on the properties, and transmitting information indicative of the estimated degrees of interference to a system for performing a method of determining a set of beams. The method may be performed by software running on a programmable device. This software may be provided as a computer program product.

This method of determining a set of beams may comprise obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

In a twelfth aspect of the invention, a method of measuring properties of signals transmitted in a first cell comprises measuring, while in the serving area of a second cell, properties of signals transmitted in the first cell, the wireless signals being transmitted by a transmitter in the first cell using a plurality of beams, and transmitting information indicative of the properties to a system performing a method of determining a set of beams for transmitting wireless signals to a plurality of mobile devices in the first cell, the method of determining the set of beams comprising obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell The method may be performed by software running on a programmable device. This software may be provided as a computer program product. Information indicative of a signal strength may be transmitted in dependence on the measured signal strength exceeding a threshold, for example.

In a thirteenth aspect of the invention, a method of measuring properties of signals transmitted in a first cell comprises measuring, while in the serving area of a second cell, properties of signals transmitted in the first cell, the wireless signals being transmitted by a transmitter in the first cell using a plurality of beams, and transmitting information indicative of the properties to a system performing a method of determining an estimated degree of interference for each of a plurality of beams, the method of determining the estimated degrees of interference comprising obtaining the information indicative of the properties of the received signals, determining the estimated degree of interference for each of the plurality of beams based on the properties, and transmitting information indicative of the estimated degrees of interference to a system performing a method of determining a set of beams. The method may be performed by software running on a programmable device. This software may be provided as a computer program product.

This method of determining a set of beams may comprise obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

In a fourteenth aspect of the invention, a method of measuring properties of signals transmitted in a first cell comprises measuring, while in the serving area of a second cell, properties of signals transmitted in the first cell, the wireless signals being transmitted by a transmitter in the first cell using a plurality of beams, and transmitting information indicative of the properties to a system performing a method of aggregating properties, the method of aggregating properties comprising receiving, from a second plurality of mobile devices, information indicative of properties of signals transmitted by the transmitter in a first cell using the plurality of beams, the properties being measured by the second plurality of mobile devices while in the serving area of at least one second cell, aggregating the properties measured by the second plurality of mobile devices, and transmitting information indicative of the aggregated properties to a system performing a method of determining estimated degrees of interference and/or determining a set of beams. The method may be performed by software running on a programmable device. This software may be provided as a computer program product.

This method of determining the estimated degrees of interference may comprising obtaining the information indicative of the properties of the received signals, determining the estimated degree of interference for each of the plurality of beams based on the properties, and transmitting information indicative of the estimated degrees of interference to a system for performing a method of determining a set of beams.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations for determining a set of beams for transmitting wireless signals to a plurality of mobile devices in a first cell.

The executable operations comprise obtaining an estimated degree of interference for each of a plurality of beams, the estimated degrees of interference being determined based on properties of received signals transmitted by a transmitter in the first cell using the plurality of beams, the received signals being received by a second plurality of mobile devices while in the serving areas of at least one second cell, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

A non-transitory computer-readable storage medium stores at least a second software code portion, the second software code portion, when executed or processed by a computer, being configured to perform executable operations for determining an estimated degree of interference for each of a plurality of beams.

The executable operations comprise obtaining information indicative of properties of received signals transmitted by a transmitter in a first cell using the plurality of beams, the properties being measured by a second plurality of mobile devices while in the serving area of at least one second cell, determining the estimated degree of interference for each of the plurality of beams based on the properties, and transmitting information indicative of the estimated degrees of interference to a system performing a method of determining a set of beams for transmitting wireless signals to a plurality of mobile devices in the first cell, the method of determining the set of beams comprising obtaining the estimated degree of interference for each of the plurality of beams, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

A non-transitory computer-readable storage medium stores at least a third software code portion, the third software code portion, when executed or processed by a computer, being configured to perform executable operations for aggregating properties.

The executable operations comprise receiving, from a second plurality of mobile devices, information indicative of properties of signals transmitted by a transmitter in a first cell using a plurality of beams, the properties being measured by the second plurality of mobile devices while in the serving area of at least one second cell, aggregating the properties measured by the second plurality of mobile devices, and transmitting information indicative of the aggregated properties to a system performing a method of determining a set of beams for transmitting wireless signals to a plurality of mobile devices in a first cell, the method of determining the set of beams comprising obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

Alternatively, the executable operations comprise receiving, from a second plurality of mobile devices, information indicative of properties of signals transmitted by a transmitter in a first cell using a plurality of beams, the properties being measured by the second plurality of mobile devices while in the serving area of at least one second cell, aggregating the properties measured by the second plurality of mobile devices, and transmitting information indicative of the aggregated properties to a system performing a method of determining an estimated degree of interference for each of a plurality of beams, the method of determining the estimated degrees of interference comprising obtaining the information indicative of the properties of the received signals, determining the estimated degree of interference for each of the plurality of beams based on the properties, and transmitting information indicative of the estimated degrees of interference to a system for performing a method of determining a set of beams.

A non-transitory computer-readable storage medium stores at least a fourth software code portion, the fourth software code portion, when executed or processed by a computer, being configured to perform executable operations for measuring properties of signals transmitted in a first cell.

The executable operations comprise measuring, while in the serving area of a second cell, properties of signals transmitted in the first cell, the wireless signals being transmitted by a transmitter in the first cell using a plurality of beams, and transmitting information indicative of the properties to a system performing a method of determining a set of beams for transmitting wireless signals to a plurality of mobile devices in the first cell, the method of determining the set of beams comprising obtaining an estimated degree of interference for each of the plurality of beams, the estimated degrees of interference being determined based on the properties of the received signals, taking a decision, based on the estimated degrees of interference of the plurality of beams, whether to avoid usage of one or more beams and/or whether to adjust one or more beams, the one or more beams being transmitted in a spectrum shared by the first cell and the at least one second cell, determining the set of beams for transmitting the wireless signals to the plurality of mobile devices in the first cell in accordance with the decision, and causing the transmitter to use the determined set of beams to transmit the wireless signals to the plurality of mobile devices in the first cell.

Alternatively, the executable operations comprise measuring, while in the serving area of a second cell, properties of signals transmitted in the first cell, the wireless signals being transmitted by a transmitter in the first cell using a plurality of beams, and transmitting information indicative of the properties to a system performing a method of determining an estimated degree of interference for each of a plurality of beams, the method of determining the estimated degrees of interference comprising obtaining the information indicative of the properties of the received signals, determining the estimated degree of interference for each of the plurality of beams based on the properties, and transmitting information indicative of the estimated degrees of interference to a system performing a method of determining a set of beams.

Alternatively, the executable operations comprise measuring, while in the serving area of a second cell, properties of signals transmitted in the first cell, the wireless signals being transmitted by a transmitter in the first cell using a plurality of beams, and transmitting information indicative of the properties to a system performing a method of aggregating properties, the method of aggregating properties comprising receiving, from a second plurality of mobile devices, information indicative of properties of signals transmitted by the transmitter in a first cell using the plurality of beams, the properties being measured by the second plurality of mobile devices while in the serving area of at least one second cell, aggregating the properties measured by the second plurality of mobile devices, and transmitting information indicative of the aggregated properties to a system performing a method of determining estimated degrees of interference and/or determining a set of beams.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s).

It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of a first embodiment of a mobile communication network;
Fig. 2 is a block diagram of a second embodiment of the mobile communication network;
Fig. 3 depicts an example of a first cell and an example of a partially overlapping second cell;
Fig. 4 is a block diagram of a third embodiment of a mobile communication network;
Fig. 5 is a block diagram of a fourth embodiment of a mobile communication network;
Fig. 6 is a flow diagram of an embodiment of the method of determining a set of beams;
Fig. 7 shows embodiments of the methods being divided into four stages;
Fig. 8 is a flow diagram of an embodiment of the measurement stage of Fig. 7;
Fig. 9 is a flow diagram of a first embodiment of the aggregation stage of Fig. 7;
Fig. 10 is a flow diagram of a second embodiment of the aggregation stage of Fig. 7;
Fig. 11 is a flow diagram of an embodiment of the processing stage of Fig. 7;
Fig. 12 is a flow diagram of an embodiment of the resource management stage of Fig. 7;
Fig. 13 shows an example of decisions that may be taken based on the estimated degrees of interference; and
Fig. 14 is a block diagram of an exemplary data processing system for performing the methods of the invention.

Corresponding elements in the drawings are denoted by the same reference numeral.

### DETAILED DESCRIPTION OF THE DRAWINGS

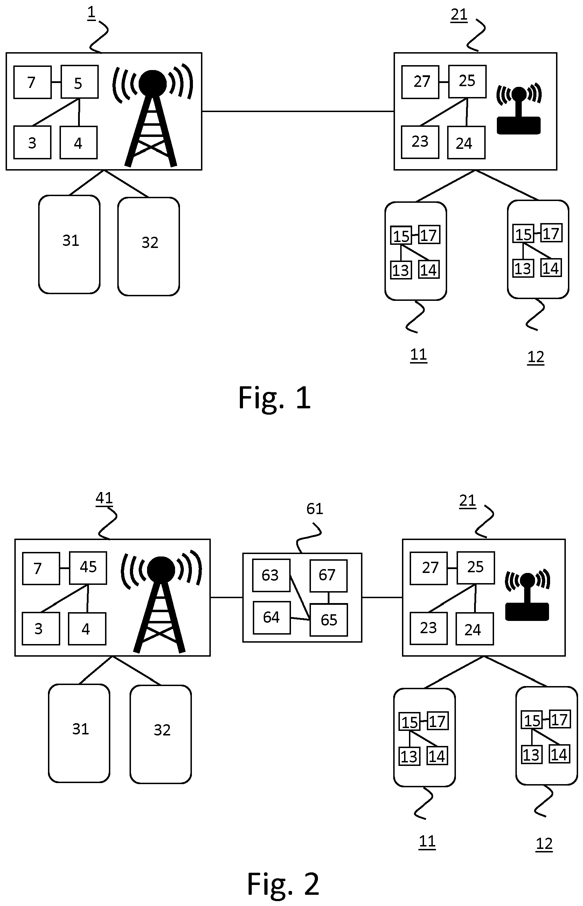

Fig. 1 shows a first embodiment of a mobile communication network. The mobile communication network comprises a radio access network and a core network (not shown in Fig. 1). The radio access network comprises a base station 1 and a base station 21. The radio access network, e.g., a 5G New Radio RAN, comprises further base stations (not shown) in addition to base stations 1 and 21. The base stations 1 and 21 may be 5G gNodeB base stations, for example. The base station 1 transmits wireless signals in a first cell, e.g., a macro cell, and the base station 21 transmits wireless signals in a second cell, e.g., a small cell.

The base station 1 is configured to determine a set of beams for transmitting wireless signals to a plurality of mobile devices in the first cell. This plurality of mobile devices includes mobile devices 31 and 32. The base station 1 comprises a receiver 3, a transmitter 4, a processor 5, and a memory 7. The processor 5 is configured to obtain an estimated degree of interference for each of a plurality of beams. The estimated degrees of interference are determined based on properties of received signals, which were transmitted by transmitter 4 in the first cell using the plurality of beams. The received signals are received by a second plurality of mobile devices, which includes mobile devices 11 and 12, while in the serving area of at least one second cell. This at least one second cell includes the second cell in which the base station 21 is transmitting wireless signals. The received signals may be reference signals, for example. The reference signals may comprise SSB and/or CSI-RS in case of 5G NR, for example. The properties of the received (e.g., reference) signals may be signal strengths (e.g., RSSI), for example.

The processor 5 is further configured to take a decision, based on the estimated degrees of interference of the plurality of beams, whether to avoid usage of one or more beams and/or whether to adjust one or more beams. The one or more beams are transmitted in a spectrum shared by the first cell and the at least one second cell. The processor 5 is further configured to determine the set of beams for transmitting the wireless signals to the plurality of mobile devices in the first cell in accordance with the decision and cause the transmitter 4 to use the determined set of beams to transmit the wireless signals to the plurality of mobile devices, including mobile devices 31 and 32, in the first cell. The transmitter 4 may be a beamforming transmitter, for example.

In the embodiment of Fig. 1, the processor 5 is configured to obtain information indicative of the properties of the received signals and determine the estimated degree of interference for each of the plurality of beams (i.e., of the first cell) based on the properties. In the embodiment of Fig. 1, the base station 1 obtains information indicative of properties of received signals and processes the properties itself. In an alternative embodiment, the processing of the properties is performed by another system, e.g., by a dedicated processing system. The properties may be signal strengths, for example.

The calculation of the estimated degrees of interference may or may not take into account estimated or measured loads on the further plurality of beams (i.e., the serving beams in the second cell(s)). By taking into account estimated or measured loads, the interference impact may be taken into account better. In the embodiment of Fig. 1, the processor 5 is configured to determine the estimated degrees of interference further based on loads on a further plurality of beams associated with the received signals. The further plurality of beams is transmitted in the shared spectrum by at least one second transmitter in the at least one second cell and is received by the second plurality of mobile devices in the at least one second cell.

The mobile devices 11 and 12 each comprise a receiver 13, a transmitter 14, a processor 15, and a memory 17. The processor 15 is configured to measure, while the mobile device is in the serving area of the second cell, properties of the signals transmitted in the first cell and transmit information indicative of the properties to the base station 21. As mentioned above, the signals are transmitted by the transmitter 4 in the first cell using the plurality of beams.

The processor 15 may be configured to temporarily connect to the base station 1, receive, from base station 1, information which relates to the CSI-RS signals transmitted by base station 1, and locate the CSI-RS signals based on the received information. The information may be received from the base station in a 5G NR RRC message, for example.

The base station 21 comprises a receiver 23, a transmitter 24, a processor 25, and a memory 27. The processor 25 is configured to receive, from the second plurality of mobile devices, which includes mobile devices 11 and 12, the information indicative of the properties, aggregate the properties measured by the second plurality of mobile devices, and transmit information indicative of the aggregated properties to the base station 1.

Fig. 2 shows a second embodiment of a mobile communication network. In this second embodiment, the processing of the properties, e.g., signal strengths, is performed by a dedicated processing system 61. Instead of base station 1, a base station 41 is present in the mobile communication network. The base station 41 comprises a processor 45 and the same receiver 3, transmitter 4, and memory 7 as comprised in the base station 1. The processor 45 is configured in a similar manner as the processor 5 of base station 1, except that the processor 45 is not configured to determine/calculate the estimated degrees of interference itself but configured to receive information indicative of the estimated degrees of interference from the processing system 61.

The processing system 61 comprises a receiver 63, a transmitter 64, a processor 65, and a memory 67. The processor 65 is configured to obtain information indicative of properties of received signals transmitted by transmitter 4 in the first cell using the plurality of beams, determine the estimated degree of interference for each of the plurality of beams based on these properties, and transmit information indicative of the estimated degrees of interference to the base station 41. Like in the embodiment of Fig. 1, the properties are measured by a second plurality of mobile devices, including mobile devices 11 and 12, while in the serving area of at least one second cell. The information is received from base station 21. Mobile devices 11 and 12 and base station 21 have been described in relation to Fig. 1.

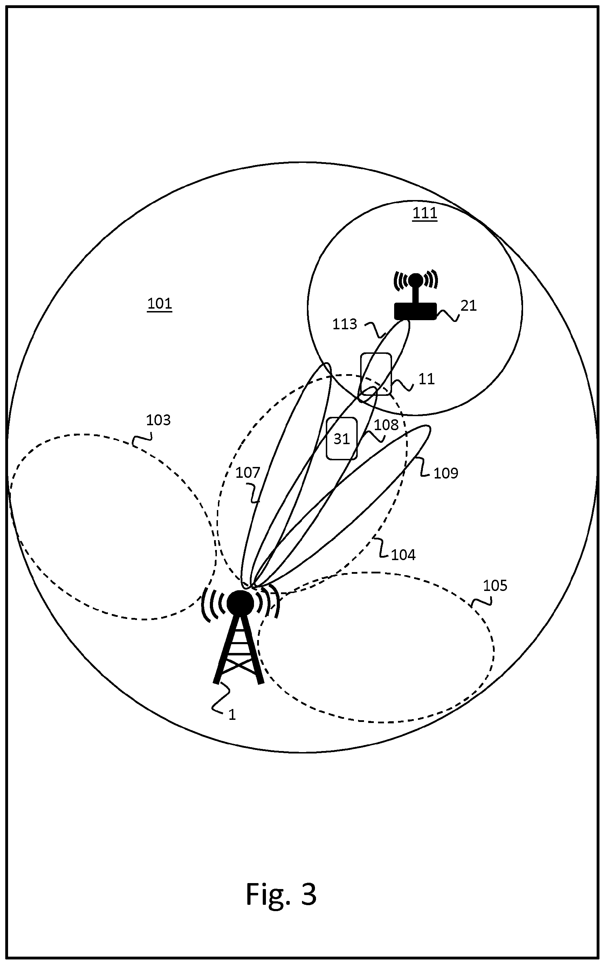

Fig. 3 depicts an example of a first cell 101 and a second cell 111. In this example, the first cell 101 is a macro cell and the second cell 111 is a small cell deployed within the coverage area of the first cell 101, i.e., the macro-cell. In such a situation, the small cell may share part of the frequency resources with the macro cell, where those shared resources are available with priority to the small cell and hence the macro-cell should not cause noticeable interference to the small cell users. In this patent specification, such sharing is assumed to occur. The same sharing may occur when the first and second cell are neighboring cells.

Both cells apply (e.g., GoB -based) beamforming to serve their users. In 5G technology, this implies that each cell (i) periodically broadcasts a grid of (relatively wide) SSB beams used to enable initial access; and (ii) upon need, transmits a (full or partial) grid of (relatively narrow) CSI-RS beams which are used for beam management of active user connections. The partial CSI-RS grid transmitted by the gNodeB to serve a given mobile device (amongst others) is typically initially based on the SSB beam used in initial access, and later (once in active mode) determined as a subset of CSI-RS beams 'surrounding' the beam that is in actual use for the PDCCH /PDSCH transmissions. Thus, the base station 1 transmits (wider) SSB signals 103-105 and (narrower) CSI-RS signals 107-109 in the first cell 101.

Actual downlink data transfer on the PDSCH applies beamforming with a precoder based either (a) on mobile device feedback on the measured CSI-RSs; or (b) on channel estimations done by the gNodeB based on the reception of an uplink SRS signal transmitted by the mobile device. In case of (a) the applied precoder is either (a1) the one used to beamform the CSI-RS most strongly received by the mobile device, as fed back by means of a CRI; or (a2) another codebook-based precoder derived by the mobile device based on the CSI-RS measurements and signaled by means of a PMI.

If no preventive measures would be taken, small-cell mobile device 11 may experience interference from the macro-cell due to SSB beam 104, CSI-RS beam 108 (defined to lie 'within' SSB beam 104) and/or any PDCCH/PDSCH transmission transmitted in the same direction, assuming use of the same frequency resources. By configuring the mobile network as described above, such interference is reduced or prevented by forbidding the macro-cell to transmit PDCCH and/or PDSCH beams, e.g., to mobile device 31, that are known to cause excessive interference to small cell users, preferably at times when the small cell is anticipated/predicted to serve traffic in the interfered area. Or, alternatively, to limit the macro-cell's transmit power and/or suitably modify the width or direction used to transmit those identified beams.

Mobile device 11 is located in the serving area of the second cell 111 and is normally served by base station 21, e.g. with beam 113. However, while in the serving area of the second cell, the mobile device 11 measures at least one property, e.g., signal strength, of the signals transmitted by base station 1. The mobile device 11 may perform these measurements multiple times, possibly when at multiple locations. These measurements are performed by a plurality of mobile devices in the serving area of the second cell 111.

Multiple of these mobile devices may receive a signal transmitted over the same beam, e.g., the same reference signal. Normally, the same reference signal is periodically transmitted over the same beam. In this case, the estimated degree of interference may be determined for this beam by aggregating measurements (e.g., by using weighted averaging) from the multiple mobile devices. This aggregation may comprise two steps, for example. For instance, a degree of coupling may first be determined per combination of first cell beam and second cell beam and an effective degree of coupling (i.e., estimated degree of interference) may then be determined per first cell beam, as will be described later in this patent specification.

In the example of Fig. 3, only one second cell is shown. However, there may be multiple second cells adjacent to and/or within the first cell 101 and mobile devices in the serving areas of all these multiple second cells may perform the above-mentioned measurements. Although Fig. 3 describes a scenario with a macro- and a small cell, the described problem and described solution hold in a more general setting of any type of neighboring cells that share spectrum.

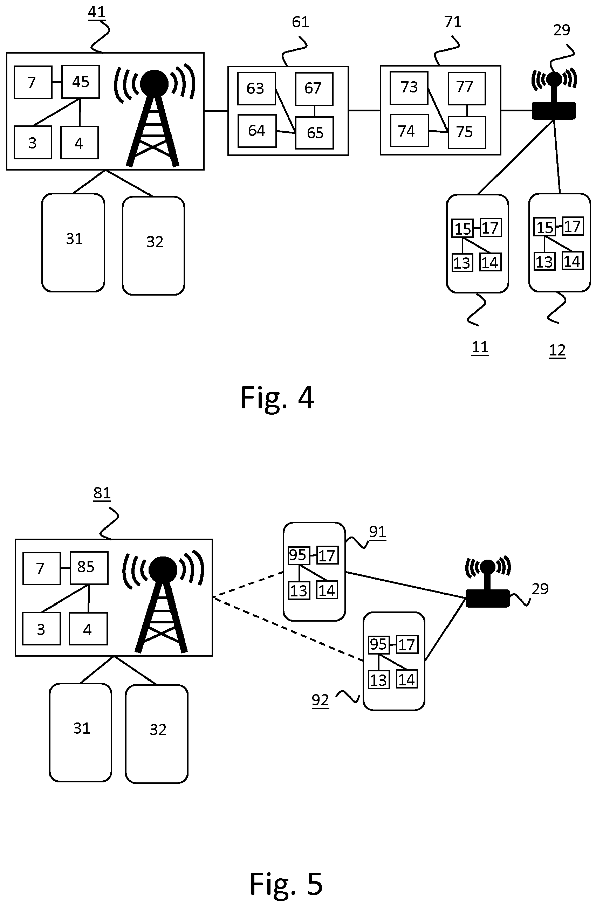

In the embodiments of Figs. 1 and 2, the base station 21 was configured to aggregate the properties measured by the second plurality of mobile devices. Fig. 4 shows a third embodiment of a mobile communication network. In this third embodiment, this aggregation is performed by a separate network unit 71.

The network unit 71 comprises a receiver 73, a transmitter 74, a processor 75, and a memory 77. The processor 75 is configured to receive, from the second plurality of mobile devices, via a base station 29, the information indicative of the properties, aggregate the properties measured by the second plurality of mobile devices, and transmit information indicative of the aggregated properties to the processing system 61. In a variant on this embodiment, base station 1 of Fig. 1 is present instead of base station 41 and processing system 61.

Fig. 5 shows a fourth embodiment of a mobile communication network. In this fourth embodiment, mobile devices 11 and 12 of Figs. 1, 2, and 4 have been replaced by mobile devices 91 and 92. A processor 95 of mobile devices 91 and 92 is configured in the same manner as processor 15 of mobile devices 11 and 12, except that processor 95 is configured to transmit the information indicative of the properties to the base station 81 instead of to the base station 29, unlike processor 15 of mobile devices 11 and 12, which is configured to transmit the information indicative of the properties to the base station 21, as described in relation to Figs. 1 and 2. Base station 81 is configured in a similar manner as base station 1 of Fig. 1, but the base station 81 receives the information indicative of properties of received signals from the mobile devices served by the at least one second cell, e.g. mobile devices 91 and 92, instead of from the base station 29.

In the embodiment of Fig. 5, loads are not taken into account in the calculation of the estimated degrees of interference. However, this does not mean that the loads are assumed to be zero. In the embodiment of Fig. 5, the estimated degree of interference is merely an estimated degree of potential interference, as due to the unpredictability of traffic, there might not be any traffic in the at least one second cell that could experience interference from beams transmitted to mobile devices in the first cell.

In an alternative embodiment the base station 29 transmits information indicative of the loads on the further plurality of beams to the base station 81 or to the mobile devices 91 and 92. In the latter case, the mobile devices 91 and 92 forward this information to the base station 81. By taking into account estimated or measured loads, the significance/relevance of the potential interference is quantified.

In the embodiments of Figs. 1 and 2, the base station 21 was configured to aggregate the properties measured by the second plurality of mobile devices. In the embodiment of Fig. 4, the network unit 71 was configured to perform this aggregation. In the fourth embodiment of Fig. 5, the base station 81 is configured to perform this aggregation. In a variant of Fig. 2, the processing system 61 of Fig. 2 may be configured to perform this aggregation.

In the embodiments of Figs. 1-5, each of the base stations comprises a single unit. In an alternative embodiment, a base station may comprise a central unit and one or multiple distributed units, for example.

In the embodiments shown in Figs. 1-5, the base stations 1, 21, 41, and 81 comprise one processor. In an alternative embodiment, one or more of the base stations comprises multiple processors. The processor of the base stations 1, 21, 41, and 81 may be a general-purpose processor, e.g., an Intel or an AMD processor, or an application-specific processor, for example. The processor may comprise multiple cores, for example. The processor may run a Unix-based or Windows operating system, for example. The memory 7 and/or memory 27 may comprise solid state memory, e.g., one or more Solid State Disks (SSDs) made out of Flash memory, or one or more hard disks, for example.

The receivers 3 and 23 and the transmitters 4 and 24 may use one or more wireless communication technologies such as Wi-Fi, LTE, and/or 5G New Radio to communicate with mobile devices 31-32 and 11-12, for example. The receivers 3 and 23 and the transmitters 4 and 24 may use one or more communication technologies (wired or wireless) to communicate with other systems in the radio access network or in the core network, for example. The receivers and the transmitter may be combined in a transceiver. The base stations may comprise other components typical for a component in a mobile communication network, e.g., a power supply.

In the embodiments shown in Figs. 2 and 4, the processing system 61 comprises one processor 65. In the embodiment shown in Fig. 4, the network unit 71 comprises one processor 75. In an alternative embodiment, the processing system 61 and/or the network unit 71 comprise multiple processors. The processor may be a general-purpose processor, e.g., an Intel or an AMD processor, or an application-specific processor, for example. The processor may comprise multiple cores, for example. The processor may run a Unix-based or Windows operating system, for example. The memory 67 and/or memory 77 may comprise solid state memory, e.g., one or more Solid State Disks (SSDs) made out of Flash memory, or one or more hard disks, for example.

The receivers 63 and 73 and the transmitters 64 and 74 may use one or more communication technologies (wired or wireless) to communicate, for example, with other systems in the radio access network or in the core network, e.g., with one or more base stations. The receiver and the transmitter may be combined in a transceiver. The processing system 61 and the network unit 71 may comprise other components typical for a network unit in a mobile communication network, e.g., a power supply.

In the embodiments shown in Figs. 1-5, the mobile devices 11-12 and 91-92 comprise one processor 15 or 95. In an alternative embodiment, one or more of the mobile devices 11-12 and 91-92 comprise multiple processors. The processors 15 and 95 may be general-purpose processors, e.g., ARM or Qualcomm processors, or application-specific processors. The processors 15 and 95 may run Google Android or Apple iOS as operating system, for example.

The receiver 13 and the transmitter 14 of the mobile devices 11-12 and 91-92 may use one or more wireless communication technologies such as Wi-Fi, LTE, and/or 5G New Radio to communicate with base stations, for example. The receiver 13 and the transmitter 14 may be combined in a transceiver. The mobile devices 11-12 and 91-92 may comprise other components typical for a mobile device, e.g., a battery.

A mobile device may also be referred to by those skilled in the art as a mobile station (MS), a subscriber station, a mobile unit, a subscriber unit, a wireless unit, a wireless terminal, a wireless device, a wireless communications device, a remote device, a mobile subscriber station, an access terminal (AT), a mobile terminal, a user equipment (UE), a remote terminal, a handset, a terminal, a user agent, a mobile client, a client, or some other suitable terminology.

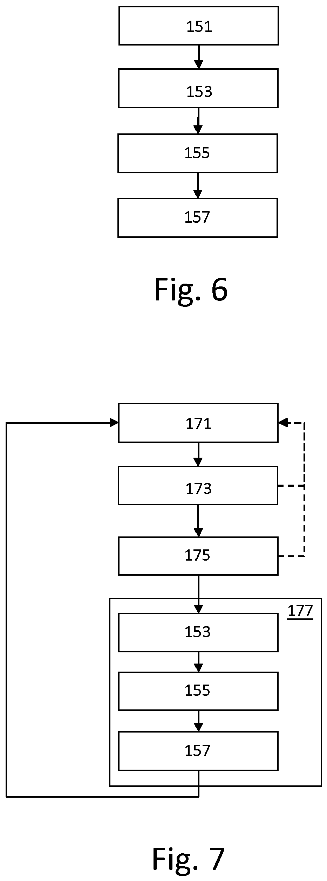

An embodiment of the method of determining a set of beams for transmitting wireless signals to a plurality of mobile devices in a first cell is shown in Fig. 6. The method may be performed by a base station, for example. A step 151 comprises obtaining an estimated degree of interference for each of a plurality of beams. The estimated degrees of interference are determined based on properties of received signals transmitted by a transmitter in the first cell using the plurality of beams. The received signals are received by a second plurality of mobile devices while in the serving areas of at least one second cell.

A step 153 comprises taking a decision, based on the estimated degrees of interference of the plurality of beams, whether to avoid usage of one or more beams (for some time) and/or whether to adjust one or more beams (for some time), the one or more beams being transmitted in a spectrum shared by the first cell and the at least one second cell. The decision may be more specific or less specific. An example of a decision that is less specific is a decision not to use beams in a certain range of transmission directions or not to use beams in a certain range of transmission directions with more than a certain amount of transmit power.

A step 155 comprises determining the set of beams for transmitting the wireless signals to the plurality of mobile devices in the first cell in accordance with the decision. A step 157 comprises causing the transmitter to use the determined set of beams to transmit the wireless signals to the plurality of mobile devices in the first cell.

Fig. 7 shows embodiments of the methods being divided into four stages: a measurement stage 171, an aggregation stage 173, a processing stage 175, and a resource management stage 177.

In the measurement stage 171, the second plurality of mobile devices measures the properties of the received signals while in the serving area(s) of the at least one second cell. In this measurement stage 171, mobile devices served by the second cell, e.g. the small cell, perform measurements, e.g. signal strength measurements, on the first cell's (e.g. macro-cell's) SSB and/or CSI-RS beams and submit reports to the network, e.g. via the second cell. These measurements may be performed autonomously (e.g. for SSB beams only) or performed on instruction by the second cell (e.g. for SSB beams and/or CSI-RS beams). These measurements may be performed periodically or during a specified incidental period by either all or a selected subset of mobile devices served by the second cell.

In the aggregation stage 173, the properties of the received signals that relate to the same combination of first cell beam and second cell beam are aggregated. In the processing stage 175, an estimated degree of interference is calculated for each of the plurality of beams. For example, in the processing stage 175, the measurements aggregated in the aggregation stage 173 may be processed in order (i) to estimate the potential time-dependent interference impact of the first cell's (e.g. macro-cell's) SSB/CSI-RS/PDSCH transmissions generated in distinct directions; and (ii) to estimate the significance of this time-dependent and transmission direction-specific interference impact in terms of the corresponding load.

In the resource management stage 177, a decision is taken based on the estimated degrees of interference and wireless signals (i.e., user data) are transmitted to the plurality of mobile devices in the first cell. Resource management stage 177 comprises steps 153, 155, and 157 of Fig. 6. Possible decisions in step 153 include the time-dependent (i) silencing of SSB/CSI-RS beams and preventing any PDSCH (user traffic) beam to be transmitted in the corresponding direction; (ii) a reduction of the transmit power of the aforementioned SSB/CSI-RS/PDSCH beams; (iii) an adjustment of the beam characteristics (beamwidth, beam directivity) of the aforementioned SSB/CSI-RS/PDSCH beams; and/or (iv) a modification of the (shared) spectrum (bandwidth, frequency band) assigned to the second cell(s).

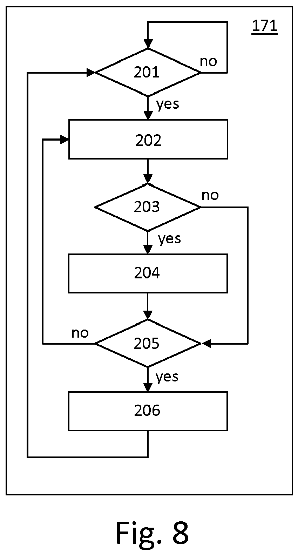

An embodiment of the measurement stage 171 of Fig. 7 is shown in Fig. 8. In this embodiment, measurement stage 171 comprises steps 201-206. Step 201 comprises a mobile device in a second cell checking whether an instruction was received, e.g., from the base station transmitting in the second cell (e.g., base station 21 of Fig. 1) or from another network unit (e.g., aggregation system 71 of Fig. 4) via the base station transmitting in the second cell or directly (not shown in Fig. 4), to start measuring properties of received signals. If it is determined that such an instruction has been received, step 202 is performed. Otherwise, step 201 is repeated.

The mobile device may be instructed to report on the SSB beams and/or the CSI-RS beams of the first cell. If the mobile device is instructed to report on CSI-RS beams of the first cell, e.g. the macro-cell, the mobile device(s) may either (i) temporarily establish an RRC connection to the first cell and perform the required CSI-RS measurements while connected; or (ii) conduct an extensive scan of where the macro-cell's CSI-RSs may be in the time/frequency/code domain based on known CSI-RS parameters without being connected to the first cell, and, if available and once found, measure them.

The possible locations of CSI-RS are largely decided by certain higher-layer parameters, provided by the network to the mobile devices (see e.g. 3GPP TS 38.211). For a mobile device not connected to a certain cell (e.g. the macro cell in the example of Fig. 3), the mobile device may not know the configured values of these parameters. Without further arrangements, this would mean a relatively high overhead for the mobile device served by the second cell to scan across all the possible options, in order to determine the interfering CSI-RS(s) of the first cell, e.g. the macro cell.

By letting the mobile device obtain CSI-RS parameters related to the first cell, this overhead may be reduced. For example, the operator may pre-configure some of the higher-layer parameters to certain fixed values or the mobile device may be able to obtain these higher-layer parameters from the first cell. CSI-RS beams are only transmitted when there is at least one active mobile device in the cell. At a particular moment (when the mobile devices in the second cell(s) are scanning for CSI-RS of the first cell), no CSI-RS beams might be transmitted by the base station in the first cell in the direction of the mobile devices in the second cell(s). The only way to solve this problem of not being able to measure CS-RSs that are not transmitted may be to let the mobile devices in the second cell(s) try to set up a connection with the first cell. This effectively causes the first cell, now temporarily serving the mobile devices originally served by the second cell(s), to transmit CSI-RSs in the direction of these mobile devices, which can then be measured as desired. This, however, also introduces some overhead.

Step 202 comprises the mobile device measuring, while in the serving area of a second cell, at least one property of a signal transmitted in the first cell, which is transmitted by a transmitter in the first cell using a plurality of beams. The mobile device may measure a property of a single beam or properties of multiple beams bₖ which belong to the first cell. The properties measured by the second plurality of mobile devices may be signal strengths, for example. Alternatively or additionally, a property may be determined based on energy detection on the spectrum, for example.

Next, a step 203 comprises determining whether one or more of the measured properties exceed a threshold. For example, step 203 may comprise determining whether a received signal strength (e.g., RSRP) is above a threshold. If so, step 204 is performed. Otherwise, step 204 is skipped, and step 205 is performed directly. In an alternative embodiment, step 203 is omitted.

Step 204 comprises the mobile device storing in a memory, e.g., as part of a report to be transmitted, information indicative of the one or more properties measured in step 202. The one or more properties are associated with a beam identifier of the beam over which the signal was transmitted. All measured properties may be stored. Alternatively, only the top N measured beams bₖ with measured values above a threshold of α may be stored/reported. Both N and α could be parameters to be configured. Step 205 comprises checking whether the mobile device can stop measuring properties of signals transmitted in the first cell. If so, step 206 is performed. If not, step 202 is repeated, after which the method proceeds as shown in Fig. 8.

Step 206 comprises transmitting the information indicative of the properties as stored in step 204, including the associations with the beam identifiers. The information may be transmitted to the base station transmitting in the second cell, to the base station transmitting in the first cell, or to another network unit. Step 201 is repeated after step 206, after which the method proceeds as shown in Fig. 8.

Thus, the mobile device may for example measure the RSRPs of all SSB and/or CSI-RS signals from the first cell that it can hear, compare the RSRPs to a configured threshold (which may be different for the SSB and the CSI-RS signals/beams), and include both the beam identifiers and the RSRP levels of those SSBs/CSI-RSs exceeding the RSRP threshold in a report sent to the second cell. Instead of RSRPs, normalized RSRP values may be used, i.e. normalized to the RSRP value of the second cell beam aⱼ.

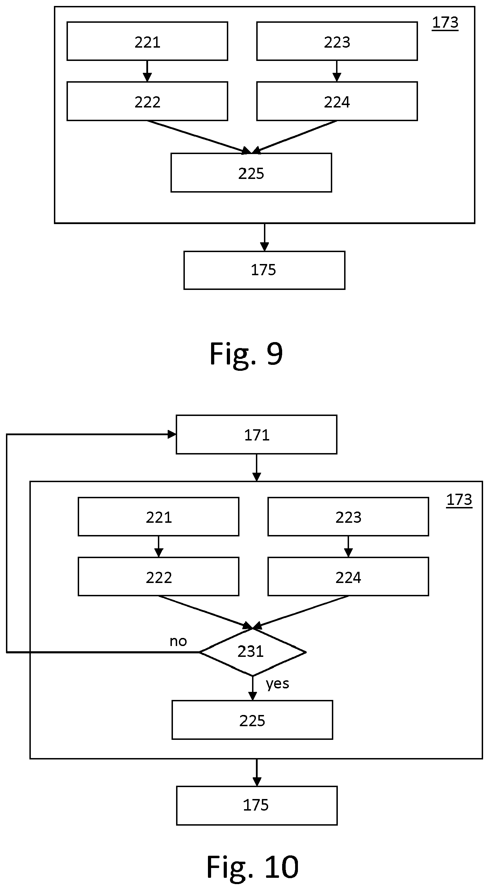

A first embodiment of the aggregation stage 173 of Fig. 7 is shown in Fig. 9. In this embodiment, the aggregation stage 173 comprises steps 221-225. Steps 221-225 may be performed by a base station (e.g., base station 21 of Fig. 1) or by another network unit (e.g., aggregation system 71 of Fig. 4), for example.

Step 221 comprises receiving, from the second plurality of mobile devices, i.e., the mobile devices in the second cell(s), information indicative of properties of signals transmitted by a transmitter in a first cell using a plurality of beams. These properties have been measured by the second plurality of mobile devices while in the serving area of at least one second cell (in step 202 of Fig. 8). This information was transmitted by the second plurality of mobile devices in step 206 of Fig. 8.

The received information may also identify, for each measured property or signal, the beam aⱼ that was transmitted by at least one second transmitter in the at least one second cell to the mobile device performing the measurement while the mobile device was at the location at which it performed the measurement. If the information does identify this beam, step 221 may comprise identifying this beam aⱼ based on locally stored information, e.g., stored in the base station.

Next, step 222 comprises aggregating the properties measured by the second plurality of mobile devices based on the information received in step 221. The properties are aggregated per combination of beam transmitted in the first cell and beam transmitted in the at least one second cell. The properties measured by the second plurality of mobile devices may be signal strengths, for example.

In step 222, for each first cell, the measurements for the combinations [aⱼ, (bₖ, RSRPₖ), k = 1, 2, ...] are aggregated over multiple mobile devices over some period of time. The result is a plurality of combinations of first cell beam and second cell beam, and an aggregation of the properties measured per combination. This way, for each second cell beam aⱼ, the significance can be determined of the interference that beams bₖ in first cell may cause to transmissions using beam aⱼ in case first-cell transmissions would indeed use beam bₖ.

Aggregating signal strengths may comprise counting what fraction of measurements of the signal strength of a first cell beam exceeds a threshold or actually taking the received signal strengths more explicitly into account (e.g., averaging or a percentile). In an implementation of step 222, for each (aⱼ, bₖ) pair, a 'degree of coupling' d(aⱼ, bₖ) is derived as e.g. the fraction of 'aⱼ-UEs' that have included beam bₖ in their report. Whether an aⱼ-UE has included beam bₖ in its report may be represented by a Boolean value. An alternative definition of the 'degree of coupling' may incorporate the reported RSRP levels, e.g. as a means of weighting these Boolean values.

In the embodiment of Fig. 9, steps 223 and 224 are also performed. Besides the conducted beam-oriented measurements conducted by the mobile devices, the second cell (e.g., the small cell) monitors the load carried on each of its beams aⱼ in step 223. In an alternative embodiment, no load is taken account in the calculation of the estimated degrees of interference and in this alternative embodiment, the load does not need to be monitored. Step 223 comprises determining the loads on at least the beams transmitted in the shared spectrum by at least one second transmitter in the at least one second cell, which are the beams being received by the second plurality of mobile devices in the at least one second cell.

These loads may be measured by the network unit that performs steps 221-225, e.g., if steps 221-225 are performed by the base station transmitting in the second cell, or may be measured by another network unit and then reported to the network unit that performs steps 221-225.

Next, step 224 comprises averaging the loads determined in step 223 per beam transmitted in the second cell. The beam-specific loads may be averaged over time to derive a single load value per second-cell beam or, alternatively, a temporal profile may be derived, indicating the variability of the beam-specific loads over time, e.g. averaged on a per-hour level. This is done in order to learn when and how much of its served traffic would experience interference from the different SSB/CSI-RS beams and, primarily, PDSCH transmissions in the corresponding directions. The temporal profile is a time pattern, e.g., one load value for every hour of the day (which would result in 24 load values instead of one load value). Creating the temporal profile also entails averaging to obtain the e.g., per-hour values, since instantaneous e.g., millisecond-level loads would still need to be averaged to get such an e.g., per-hour value.

In the embodiment of Fig, 9, these steps 223 and 224 are performed at least partly in parallel with steps 221 and 222 but could also be performed before step 221 or after step 222, for example. In an alternative embodiment, steps 223 and 224 are omitted from the aggregation method of Fig. 9. For example, if the aggregation method is performed by one or more other network units than the base station(s) in the at least one second cell, then steps 223 and 224 may instead be performed by the base station(s) in the at least one second cell and the one or more other network units may receive the averaged loads from the base station(s) in the at least one second cell.

Step 225 is performed after steps 222 and 224 have been performed. Step 225 comprises providing information indicative of the aggregated properties and the averaged loads to the processing stage 175. If the processing stage 175 is performed by another system than the system which performs the aggregation stage 173, step 225 may comprise transmitting the information, e.g., to the base station 1 of Fig. 1 or the processing system 61 of Fig. 2.

A second embodiment of the aggregation stage 173 of Fig. 7 is shown in Fig. 10. The second embodiment of Fig. 10 is an extension of the first embodiment of Fig. 9. In this second embodiment, a step 231 is performed after steps 222 and 224 have been performed. Step 231 comprises determining whether enough properties of received signals have been collected. If not, measurement stage 171 is repeated. For example, one or more mobile devices in the serving area of a second cell are asked to perform more measurements. If it is determined in step 231, that enough properties of received signals have been collected, step 225 is performed.

In a variant on the embodiment of Fig. 10, at least one level of confidence in the aggregated properties is determined and the information indicative of the aggregated properties is provided to the processing stage 175 in dependence on this at least one level of confidence exceeding a threshold. If a confidence level in a certain aggregation, e.g., determined for a certain beam of the plurality of beams, is not sufficient, transmission of information indicative of the aggregation of properties may be postponed for only this beam. Alternatively, transmission of information indicative of any aggregation may be postponed. This may be determined in step 231. If the confidence level in a certain aggregation is not sufficient, measurement stage 171 is repeated.

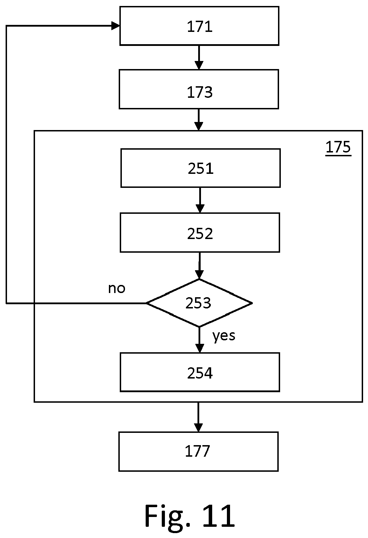

An embodiment of the processing stage 175 of Fig. 7 is shown in Fig. 11. In this embodiment, processing stage 175 comprises steps 251-254. Steps 251-254 may be performed by a base station (e.g., base station 1 of Fig. 1 or base station 81 of Fig. 5) or by a dedicated processing system (e.g., processing system 61 of Fig. 1), for example.

Step 251 comprises obtaining information indicative of properties of received signals transmitted by the transmitter in a first cell using the plurality of beams. The properties have been measured by the second plurality of mobile devices while in the serving area of the at least one second cell. In the embodiment of Fig. 11, the information is indicative of aggregated properties and averaged loads. The information specifies an aggregation of the properties per combination of first cell beam and second cell beam, i.e. the determined degrees of coupling d(aⱼ, bₖ), and averages of the load per second cell beam.

Step 252 comprises determining an estimated degree of interference for each of the plurality of beams (of the first cell) based on these properties and based on the loads. In an implementation, the estimated degrees of interference are determined by calculating degrees of coupling. The estimated degree of interference preferably depends on the load, because with a higher load, the interference impact will be higher. Step 252 may involve the use of machine learning techniques.

Step 252 may comprise determining time-dependent estimated degrees of interference for each of the plurality of beams. Time-dependent estimated degrees of interference may be obtained by obtaining time-dependent (time-profiled) loads and determining the time-dependent estimated degrees of interference based on these time-dependent loads. Since the loads are typically different per hour and per day of the week, this makes it possible to optimize beam management according to time-varying traffic profiles.

In an implementation of step 252, for each bₖ of the first cell, an 'effective degree of coupling' ed(bₖ) is determined, for example, by using the received loads to calculate a weighted sum of all d(aⱼ, bₖ) over all aⱼ (of all second cells), wherein the loads are used as weights. The 'effective degree of coupling' ed(bₖ) is either time-averaged or time-profiled depending on whether the loads are time-averaged or time-profiled. This 'effective degree of coupling' metric indicates the overall interference impact a transmission on beam bₖ is estimated to have, considering all affected beams in all second cells as well as the traffic load on each of these affected beams. The interference effect is increasing in the traffic load of the affected beams. Thus, the 'effective degree of coupling' ed(bₖ) represents the estimated degree of interference. The estimated degree of interference not an absolute indicator of the interference level but is indicative of it and is sufficiently indicative of the interference level to make decisions based on it.

In the embodiment of Fig. 11, step 252 further comprises determining at least one level of confidence in the estimated degrees of interference. Along with the 'effective degree of coupling' (representing the estimated degree of interference), a metric for the associated level of confidence is determined, expressing the degree to which the obtained 'effective degree of coupling' is reliable. Typically, the higher the number and the lower the variability of the underlying measurements, the higher the level of confidence in the 'effective degree of coupling'. The targeted level of confidence level can be derived e.g. by applying known statistical techniques for constructing confidence intervals.

Step 253 comprises checking whether the levels of confidence determined in step 252 are high enough. If not, measurement stage 171 is repeated. In other words, based on the degree of accuracy (level of confidence) in the obtained estimations, a trigger may be issued to one or more second cells to gather additional beam- and/or traffic-oriented measurements. If it is determined in step 253, that the levels of confidence determined in step 252 are high enough, step 254 is performed.

In a first implementation, step 254 is only performed if all levels of confidence determined in step 252 are high enough. In this implementation, the decision whether to avoid usage of one or more beams and/or whether to adjust one or more beams is postponed with respect to all beams if one or more confidence levels are not high enough. In the meantime, the beams used for data transmission are determined without using any effective degrees of coupling/estimated degrees of interference.

In a second implementation, the decision may already be taken with respect to some of the beams for which the confidence level of the estimated degree of interference exceeds the threshold. In this implementation, both step 171 and 254 may be performed after step 253.

Step 254 comprises providing information indicative of the estimated degrees of interference, as determined in step 252, to the resource management stage 177. If the resource management stage 177 is performed by the same system which performs the processing stage 175, step 254 may simply comprise calling another function on the same system with the information indicative of the estimated degrees of interference as input data or storing the information somewhere so that the same software or other software can retrieve it in order to perform the resource management stage 177. If the resource management stage 177 is performed by another system, step 254 may comprise transmitting the information, e.g., to base station 41 of Fig. 2.

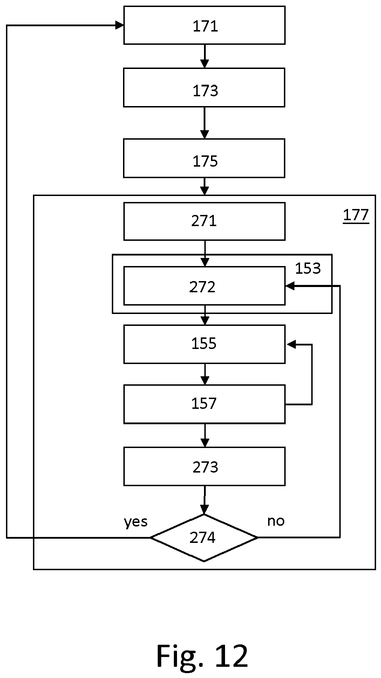

An embodiment of the resource management stage 177 of Fig. 7 is shown in Fig. 12. In this embodiment, resource management stage 177 comprises steps 153-157 and steps 271-273. These steps may be performed by a base station (e.g., base station 1 of Fig. 1, base station 41 of Fig. 2, or base station 81 of Fig. 5), for example. Step 272 is an implementation of step 153.

Step 271 comprises obtaining information indicative of the estimated degrees of interference, as provided in the processing stage 175 in step 254, see Fig. 11. Step 153 comprises taking a decision, based on the estimated degrees of interference of the plurality of beams, whether to avoid usage of one or more beams and/or whether to adjust one or more beams. The one or more beams are transmitted in a spectrum shared by the first cell and the at least one second cell.

For example, in step 153, a decision may be made for one or more of the first cell's beams bₖ and/or beams derived from bₖ to be silenced, reduced in power (when used for PDSCH transmissions) and/or modified in their beam characteristics (e.g., beam direction and/or width), for all or part of the shared spectrum.

If time-dependent estimated degrees of interference were determined in step 252 of the processing stage 175, step 272 comprises selecting, for a certain time interval, an estimated degree of interference from the time-dependent estimated degrees of interference based on the certain time interval. The decision whether to avoid usage of the one or more beams and/or whether to adjust the one or more beams is taken with respect to this certain time interval.

In the embodiment of Fig. 12, the decision whether to avoid usage of the one or more beams and/or whether to adjust the one or more beams is taken based on information indicative of a current traffic load in the first cell and/or of current traffic requirements in the first cell. Thus, the decisions whether to silence/attenuate a first cell's beams may also depend on the load on the first cell's beams and the priority/importance level of that traffic. For example, an estimation of the performance impact of taking the decision may be determined based on the current traffic load in the first cell and/or current traffic requirements in the first cell and the decision may be taken based on this estimated performance impact.

In other words, the decision whether to avoid usage of the one or more beams and/or whether to adjust the one or more beams may be based on the provided time-averaged/profiled 'effective degrees of coupling' and the first cell's own current traffic load and the QoS requirements corresponding to the served traffic in the first cell, and then inherently involves a trade-off between the importance of the traffic that is to be transmitted to a mobile device served by the first cell that is best served by a given beam bₖ, or a beam derived from beam bₖ (e.g. within a certain angular range), and estimated interference impact of such transmission to the at least one second cell (reflected by the 'effective degree of coupling', i.e. estimated degree of interference). Given this intrinsic trade-off, decision-making likely involves some policy parameter that is to be configured by the network operator.

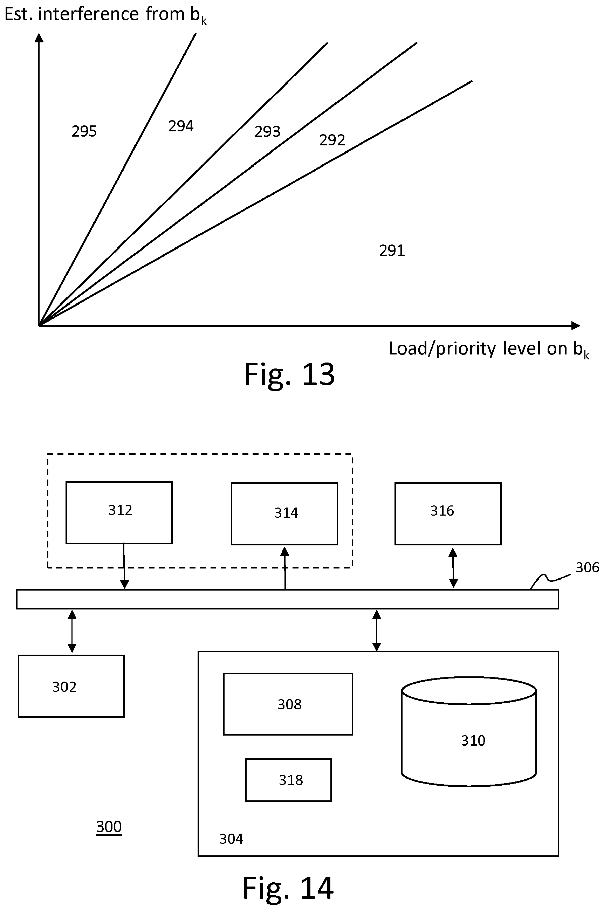

Fig. 13 shows an example of decisions that may be taken based on the estimate degrees of interference. In Fig. 13, the x-axis represents load/priority level on first cell beam bₖ and the y-axis represents the estimated interference from first cell beam v to mobile devices in the second cell. In this example, a decision on power reduction for a given beam bₖ is shown. If the combination of estimated interference from bₖ and load/priority level on bₖ falls in area 291, then the decision is taken to leave bₖ, and/or beams derived from bₖ, unaffected. If the combination of estimated interference from bₖ and load/priority level on bₖ falls in area 292, then the decision is taken to reduce power of v, and/or beams derived from bₖ, by 1 dB.

If the combination of estimated interference from bₖ and load/priority level on bₖ falls in area 293, then the decision is taken to reduce power of bₖ, and/or beams derived from bₖ, by 2 dB. If the combination of estimated interference from bₖ and load/priority level on bₖ falls in area 294, then the decision is taken to reduce power of bₖ, and/or beams derived from bₖ, by 3 dB. If the combination of estimated interference from bₖ and load/priority level on bₖ falls in area 295, then the decision is taken to switch off bk, and/or not to use beams derived from bₖ.

In the embodiment of Fig. 12, step 272 comprises taking a further decision, based on the decision and/or based on the estimated degrees of interference, whether to enlarge or reduce spectrum assigned shared between the first cell and the at least one second cell. Typically, the spectrum used by two cells comprises three partitions: a partition that is dedicated to the first cell, a partition that is dedicated to the second cell, and a shared partition between the first cell and the second cell. If there are multiple second cells, different second cells may have different shared partitions with the first cell.

In certain situations, enlarging one partition means that another partition needs to be reduced, but this is not always the case. The further decision whether to enlarge or reduce spectrum assigned shared between the first cell and the at least one second cell may further depend on the load offered to the first cell and the load offered to the at least one second cell, and optionally by the priority levels of these loads.

A further decision to reduce the spectrum assigned shared between the first cell and the at least one second cell may be taken as a direct result of the last beam in a certain part of the shared spectrum being silenced. When it is decided to silence all the beams of the first cell in a certain part of the shared spectrum, the result is that this part from the shared spectrum is shifted to a non-shared partition.

A further decision may also be taken to enlarge spectrum assigned shared between the first cell and the at least one second cell. For example, when no interference is reported by the mobile devices in the at least one second cell, e.g. the small cell, and/or the loads on the serving beams of the at least one second cell are relatively low while loads on the beams of the first cell, e.g. the macro cell, are relatively high, increasing the shared spectrum allows the mobile devices in the first cell to benefit from this increase in shared spectrum.

Next, step 155 comprises determining the set of beams for transmitting the wireless signals to the plurality of mobile devices in the first cell in accordance with the decision, and in accordance with the further decision if taken. Thus, in step 155, the decisions made are converted into actions.

The set of beams is normally determined based on feedback from the first plurality of mobile devices (i.e., the mobile devices served by the first cell) to the plurality of beams (e.g., SSB and/or CSI-RS beams, which may or may not have been previously adjusted). However, in dependence on the decision, the beam characteristics that would normally be used may need to be adjusted, e.g., by reducing transmission power and/or by adjusting beam width and/or beam direction. Determining the set of beams thus comprises determining the beam characteristics (e.g., transmit power) for the set of beams. In 5G, it is especially beneficial to determine PDSCH beams with adjusted beam characteristics, as potential interference is mostly caused by the PDSCH beams. These PDSCH beams are derived from the beams that carry the reference signals. Reference signals, e.g., SSB and/or CSI-RS of 5G NR, may continue to be transmitted in the direction of the original plurality of beams, although it is also possible to adjust or silence beams that carry reference signals.

A beam of the determined set of beams, i.e., the beams used for actual data transmission, may have the same precoder as a beam of the plurality of beams (over which the reference signals are transmitted) or may have a different precoder, as signaled by the mobile device in the first cell via PMI feedback. In other words, the PMI feedback may suggest a different precoder (different from those used for the plurality of beams) to be used for data transmission (e.g., PDSCH). To prevent that this use of a different precoder conflicts with a decision to adjust the beam direction and/or beam width of one or more beams, certain (ranges of) transmission directions may be marked as needing to be avoided.

The decisions made in step 155 may be more specific or less specific. An example of a decision that is more specific is a decision to use a certain beam with certain beam characteristics to transmit PDSCH data to a certain mobile device while it is at its current location. An example of a decision that is less specific is a decision not to use beams in a certain range of transmission directions or not to use beams in a certain range of transmission directions with more than a certain amount of transmit power. If the decision is less specific, sets of beams may be determined multiple times (at different time instances) according to the same decision.

In both cases, the decision made at a given time instance will last for some time until the instance at which the decision is reconsidered, but if the decision is more specific, it may be beneficial to make the decision last for a shorter time than if the decision is less specific. The decision affects whatever devices the first cell may be serving during that time. Step 157 comprises causing the transmitter to use the determined set of beams to transmit the wireless signals to the plurality of mobile devices in the first cell.

After wireless signals have been transmitted to the mobile devices in the first cell for a certain time, step 273 is performed. Step 273 comprises measuring the performance impact of the decision taken in step 153. For example, during some observation period, the performance impact of the conducted actions is monitored in the first cell, the at least one second cell, and optionally in additional cells in the vicinity.

Step 274 comprises determining, based on the performance impact measured in step 273, whether another iteration should be performed to further enhance performance. If so, measurement stage 171 is repeated. In other words, depending on the significance and nature of the impact observed in step 273, another iteration of actions may or may not be pursued. For example, one or more mobile devices in the serving area of a second cell may be asked to perform more measurements.

If it is determined in step 274 that another iteration does not need to be performed at the moment, step 272 is repeated, and further wireless signals are transmitted to the mobile devices in the first cell. The decisions taken in step 153 in different iterations of step 153 may be different due to time-profiled loads.

Fig. 14 depicts a block diagram illustrating an exemplary data processing system that may perform the method as described with reference to Figs. 6 to 12.

As shown in Fig. 14, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the number of times program code must be retrieved from the bulk storage device 310 during execution.

Input/output (I/O) devices depicted as an input device 312 and an output device 314 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 14 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

As pictured in Fig. 14, the memory elements 304 may store an application 318. In various embodiments, the application 318 may be stored in the local memory 308, he one or more bulk storage devices 310, or separate from the local memory and the bulk storage devices. It should be appreciated that the data processing system 300 may further execute an operating system (not shown in Fig. 14) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A system (1,41,81) for determining a set of beams for transmitting wireless signals to a plurality of mobile devices (31,32) in a first cell (101), the system (1,41,81) comprising at least one processor (5,45,85) configured to:
- obtain an estimated degree of interference for each of a plurality of beams (103-105,107-109), the estimated degrees of interference being determined based on properties of received signals transmitted by a transmitter (4) in the first cell (101) using the plurality of beams (103-105,107-109), the received signals being received by a second plurality of mobile devices (11,12) while in the serving area of at least one second cell (111),
- take a decision, based on the estimated degrees of interference of the plurality of beams (103-105,107-109), whether to avoid usage of one or more beams and/or whether to adjust one or more beams, the one or more beams being transmitted in a spectrum shared by the first cell (101) and the at least one second cell (111),
- determine the set of beams for transmitting the wireless signals to the plurality of mobile devices (31,32) in the first cell (101) in accordance with the decision, and
- cause the transmitter (4) to use the determined set of beams to transmit the wireless signals to the plurality of mobile devices (31,32) in the first cell (101).

2. A system (1,81) as claimed in claim 1, wherein the at least one processor (5,85) is configured to:
- obtain information indicative of signal strengths of the received signals, and
- determine the estimated degree of interference for each of the plurality of beams (103-105,107-109) based on the signal strengths.

3. A system (1,41,81) as claimed in claim 1 or 2, wherein the at least one processor (5,45,85) is configured to determine the estimated degrees of interference further based on loads on a further plurality of beams (113) associated with the received signals, the further plurality of beams (113) being transmitted in the shared spectrum by at least one second transmitter (24) in the at least one second cell (111) and being received by the second plurality of mobile devices (11,12) in the at least one second cell (111).

4. A system (1,41,81) as claimed in claim 3, wherein the at least one processor (5,45,85) is configured to:
- obtain time-dependent estimated degrees of interference for each of the plurality of beams (103-105,107-109),
- select, for a certain time interval, an estimated degree of interference from the time-dependent estimated degrees of interference based on the certain time interval, and
- take the decision whether to avoid usage of the one or more beams of and/or whether to adjust the one or more beams with respect to the certain time interval.

5. A system (1,41,81) as claimed in any one of the preceding claims, wherein the at least one processor (5,45,85) is configured to:
- take a further decision, based on the decision and/or based on the estimated degrees of interference, whether to enlarge or reduce spectrum shared between the first cell (101) and the at least one second cell (111), and
- determine the set of beams for transmitting the wireless signals to the plurality of mobile devices (31,32) in the first cell (101) further in accordance with the further decision.

6. A system (1,41,81) as claimed in any one of the preceding claims, wherein the at least one processor (5,45,85) is configured to:
- determine at least one level of confidence in the estimated degrees of interference, and
- take the decision whether to avoid usage of the one or more beams and/or whether to adjust the one or more beams in dependence on the at least one level of confidence exceeding a threshold.

7. A system (1,41,81) as claimed in any one of the preceding claims, wherein the at least one processor (5,45,85) is configured to take the decision whether to avoid usage of the one or more beams and/or whether to adjust the one or more beams based on information indicative of a current traffic load in the first cell (101) and/or of current traffic requirements in the first cell (101).

8. A system (1,41,81) as claimed in in any one of the preceding claims, wherein the system (1,41,81) comprises a base station or is comprised in a base station, the base station comprising the transmitter (4).

9. A system (61) for determining an estimated degree of interference for each of a plurality of beams (103-105,107-109), the system (61) comprising at least one processor (65) configured to:
- obtain information indicative of properties of received signals transmitted by a transmitter (4) in a first cell (101) using the plurality of beams (103-105,107-109), the properties being measured by a second plurality of mobile devices (11,12) while in the serving area of at least one second cell (111),
- determine the estimated degree of interference for each of the plurality of beams (103-105,107-109) based on the properties, and
- transmit information indicative of the estimated degrees of interference to a system (41) for determining a set of beams for transmitting wireless signals to a plurality of mobile devices (31,32) in a first cell (101), wherein the system (41) for determining the set of beams comprises at least one processor (45) configured to obtain the estimated degrees of interference of the plurality of beams (103-105,107-109), take a decision, based on the estimated degrees of interference of the plurality of beams (103-105,107-109), whether to avoid usage of one or more beams and/or whether to adjust one or more beams, the one or more beams being transmitted in a spectrum shared by the first cell (101) and the at least one second cell (111), determine the set of beams for transmitting the wireless signals to the plurality of mobile devices (31,32) in the first cell (101) in accordance with the decision, and cause the transmitter (4) to use the determined set of beams to transmit the wireless signals to the plurality of mobile devices (31,32) in the first cell (101).

10. A network unit (21) for aggregating properties of signals, the network unit (21) comprising at least one processor (25) configured to:
- receive, from a second plurality of mobile devices (11,12), information indicative of properties of signals transmitted by a transmitter in a first cell (101) using a plurality of beams (103-105,107-109), the properties being measured by the second plurality of mobile devices (11,12) while in the serving area of at least one second cell (111),
- aggregate the properties measured by the second plurality of mobile devices (11,12), and
- transmit information indicative of the aggregated properties to a system (1) for determining a set of beams for transmitting wireless signals to a plurality of mobile devices (31,32) in the first cell (101), wherein the system (1) for determining the set of beams comprises at least one processor (5) configured to obtain an estimated degree of interference for each of the plurality of beams (103-105,107-109), the estimated degrees of interference being determined based on the properties of the received signals, take a decision, based on the estimated degrees of interference of the plurality of beams (103-105,107-109), whether to avoid usage of one or more beams and/or whether to adjust one or more beams, the one or more beams being transmitted in a spectrum shared by the first cell (101) and the at least one second cell (111), determine the set of beams for transmitting the wireless signals to the plurality of mobile devices (31,32) in the first cell (101) in accordance with the decision, and cause the transmitter (4) to use the determined set of beams to transmit the wireless signals to the plurality of mobile devices (31,32) in the first cell (101).

11. A network unit (21,71) for aggregating properties of signals, the network unit (21,71) comprising at least one processor (25,75) configured to:
- receive, from a second plurality of mobile devices (11,12), information indicative of properties of signals transmitted by a transmitter in a first cell (101) using a plurality of beams (103-105,107-109), the properties being measured by the second plurality of mobile devices (11,12) while in the serving area of at least one second cell (111),
- aggregate the properties measured by the second plurality of mobile devices (11,12), and
- transmit information indicative of the aggregated properties to a system for determining an estimated degree of interference for each of the plurality of beams (103-105,107-109), the system (61) comprising at least one processor (65) configured to obtain the information indicative of the properties of the received signals, determine the estimated degree of interference for each of the plurality of beams (103-105,107-109) based on the properties, and transmit information indicative of the estimated degrees of interference to a system (41) for determining a set of beams.

12. A mobile device (11,12) for measuring properties of signals transmitted in a first cell (101) while in the serving area of a second cell (111), the mobile device (11,12) comprising at least one processor (15) configured to:
- measure, while in the serving area of the second cell (111), properties of signals transmitted in the first cell (101), the signals being transmitted by a transmitter (4) in the first cell (101) using a plurality of beams (103-105,107-109), and
- transmit information indicative of the properties to a system (81) for determining a set of beams for transmitting wireless signals to a plurality of mobile devices (31,32) in the first cell (101), wherein the system (81) for determining the set of beams comprises at least one processor (85) configured to obtain an estimated degree of interference for each of the plurality of beams (103-105,107-109), the estimated degrees of interference being determined based on properties of received signals transmitted by the transmitter (4) in the first cell (101) using the plurality of beams (103-105,107-109), the received signals being received by a second plurality of mobile devices (11,12) while in the serving area of at least one second cell (111), take a decision, based on the estimated degrees of interference of the plurality of beams (103-105,107-109), whether to avoid usage of one or more beams and/or whether to adjust one or more beams, the one or more beams being transmitted in a spectrum shared by the first cell (101) and the at least one second cell (111), determine the set of beams for transmitting the wireless signals to the plurality of mobile devices (31,32) in the first cell (101) in accordance with the decision, and cause the transmitter (4) to use the determined set of beams to transmit the wireless signals to the plurality of mobile devices (31,32) in the first cell (101).

13. A mobile device as claimed in claim 12, wherein the signals comprise reference signals.

14. A mobile device as claimed in claim 13, wherein the reference signals comprise Channel State Information Reference Signals and the at least one processor is configured to:
- temporarily connect to a base station in the first cell (101),
- receive information from the base station in the first cell (101), the information relating to the Channel State Information Reference Signals transmitted by the base station in the first cell (101), and
- locate the Channel State Information Reference Signals based on the received information.

15. A mobile device (11,12) for measuring properties of signals transmitted in a first cell (101) while in the serving area of a second cell (111), the mobile device (11,12) comprising at least one processor (15) configured to:
- measure, while in the serving area of the second cell (111), properties of signals transmitted in the first cell (101), the signals being transmitted by a transmitter (4) in the first cell (101) using a plurality of beams (103-105,107-109), and
- transmit information indicative of the properties to a system for determining an estimated degree of interference for each of the plurality of beams (103-105,107-109), the system comprising at least one processor configured to obtain information indicative of properties of received signals transmitted by the transmitter (4) in the first cell (101) using the plurality of beams (103-105,107-109), the properties being measured by a second plurality of mobile devices (11,12) while in the serving area of at least one second cell (111), determine the estimated degree of interference for each of the plurality of beams (103-105,107-109) based on the obtained properties, and transmit information indicative of the estimated degrees of interference to a system for determining a set of beams.

16. A mobile device (11,12) for measuring properties of signals transmitted in a first cell (101) while in the serving area of a second cell (111), the mobile device (11,12) comprising at least one processor (15) configured to:
- measure, while in the serving area of the second cell (111), properties of signals transmitted in the first cell (101), the signals being transmitted by a transmitter (4) in the first cell (101) using a plurality of beams (103-105,107-109), and
- transmit information indicative of the properties to a network unit (21,71) for aggregating properties of signals, the network unit (21,71) comprising at least one processor (25,75) configured to receive, from a second plurality of mobile devices (11,12), information indicative of properties of signals transmitted by the transmitter (4) in the first cell (101) using the plurality of beams (103-105,107-109), the properties being measured by the second plurality of mobile devices (11,12) while in the serving area of at least one second cell (111), aggregate the properties measured by the second plurality of mobile devices (11,12), and transmit information indicative of the aggregated properties to a system (1,61) for determining estimated degrees of interference and/or determining a set of beams.

17. A method of determining a set of beams for transmitting wireless signals to a plurality of mobile devices in a first cell, the method comprising:
- obtaining (151) an estimated degree of interference for each of a plurality of beams, the estimated degrees of interference being determined based on properties of received signals transmitted by a transmitter in the first cell using the plurality of beams, the received signals being received by a second plurality of mobile devices while in the serving areas of at least one second cell;
- taking (153) a decision, based on the estimated degrees of interference of the plurality of beams, whether to avoid usage of one or more beams and/or whether to adjust one or more beams, the one or more beams being transmitted in a spectrum shared by the first cell and the at least one second cell;
- determining (155) the set of beams for transmitting the wireless signals to the plurality of mobile devices in the first cell in accordance with the decision; and
- causing (157) the transmitter to use the determined set of beams to transmit the wireless signals to the plurality of mobile devices in the first cell.

18. A method of determining an estimated degree of interference for each of a plurality of beams, the method comprising:
- obtaining (251) information indicative of properties of received signals transmitted by a transmitter in a first cell using the plurality of beams, the properties being measured by a second plurality of mobile devices while in the serving area of at least one second cell;
- determining (252) the estimated degree of interference for each of the plurality of beams based on the properties; and
- transmitting (254) information indicative of the estimated degrees of interference to a system performing a method of determining a set of beams for transmitting wireless signals to a plurality of mobile devices in the first cell, the method of determining the set of beams comprising obtaining (151) the estimated degree of interference for each of the plurality of beams, taking (153) a decision, based on the estimated degrees of interference of the plurality of beams, whether to avoid usage of one or more beams and/or whether to adjust one or more beams, the one or more beams being transmitted in a spectrum shared by the first cell and the at least one second cell, determining (155) the set of beams for transmitting the wireless signals to the plurality of mobile devices in the first cell in accordance with the decision, and causing (157) the transmitter to use the determined set of beams to transmit the wireless signals to the plurality of mobile devices in the first cell.

19. A method of aggregating properties, the method comprising:
- receiving (221), from a second plurality of mobile devices, information indicative of properties of signals transmitted by a transmitter in a first cell using a plurality of beams, the properties being measured by the second plurality of mobile devices while in the serving area of at least one second cell;
- aggregating (222) the properties measured by the second plurality of mobile devices; and
- transmitting (225) information indicative of the aggregated properties to a system performing a method of determining a set of beams for transmitting wireless signals to a plurality of mobile devices in a first cell, the method of determining the set of beams comprising obtaining (151) an estimated degree of interference for each of the plurality of beams, the estimated degrees of interference being determined based on the properties of the received signals, taking (153) a decision, based on the estimated degrees of interference of the plurality of beams, whether to avoid usage of one or more beams and/or whether to adjust one or more beams, the one or more beams being transmitted in a spectrum shared by the first cell and the at least one second cell, determining (155) the set of beams for transmitting the wireless signals to the plurality of mobile devices in the first cell in accordance with the decision, and causing (157) the transmitter to use the determined set of beams to transmit the wireless signals to the plurality of mobile devices in the first cell.

20. A method of aggregating properties, the method comprising:
- receiving (221), from a second plurality of mobile devices, information indicative of properties of signals transmitted by a transmitter in a first cell using a plurality of beams, the properties being measured by the second plurality of mobile devices while in the serving area of at least one second cell;
- aggregating (222) the properties measured by the second plurality of mobile devices; and
- transmitting (225) information indicative of the aggregated properties to a system performing a method of determining an estimated degree of interference for each of a plurality of beams, the method of determining the estimated degrees of interference comprising obtaining (251) the information indicative of the properties of the received signals, determining (252) the estimated degree of interference for each of the plurality of beams based on the properties, and transmitting (254) information indicative of the estimated degrees of interference to a system for performing a method of determining a set of beams.

21. A method of measuring properties of signals transmitted in a first cell, the method comprising:
- measuring (202), while in the serving area of a second cell, properties of signals transmitted in the first cell, the wireless signals being transmitted by a transmitter in the first cell using a plurality of beams, and
- transmitting (206) information indicative of the properties to a system performing a method of determining a set of beams for transmitting wireless signals to a plurality of mobile devices in the first cell, the method of determining the set of beams comprising obtaining (151) an estimated degree of interference for each of the plurality of beams, the estimated degrees of interference being determined based on the properties of the received signals, taking (153) a decision, based on the estimated degrees of interference of the plurality of beams, whether to avoid usage of one or more beams and/or whether to adjust one or more beams, the one or more beams being transmitted in a spectrum shared by the first cell and the at least one second cell, determining (155) the set of beams for transmitting the wireless signals to the plurality of mobile devices in the first cell in accordance with the decision, and causing (157) the transmitter to use the determined set of beams to transmit the wireless signals to the plurality of mobile devices in the first cell.

22. A method of measuring properties of signals transmitted in a first cell, the method comprising:
- measuring (202), while in the serving area of a second cell, properties of signals transmitted in the first cell, the wireless signals being transmitted by a transmitter in the first cell using a plurality of beams, and
- transmitting (206) information indicative of the properties to a system performing a method of determining an estimated degree of interference for each of a plurality of beams, the method of determining the estimated degrees of interference comprising obtaining (251) the information indicative of the properties of the received signals, determining (252) the estimated degree of interference for each of the plurality of beams based on the properties, and transmitting (254) information indicative of the estimated degrees of interference to a system performing a method of determining a set of beams.

23. A method of measuring properties of signals transmitted in a first cell, the method comprising:
- measuring (202), while in the serving area of a second cell, properties of signals transmitted in the first cell, the wireless signals being transmitted by a transmitter in the first cell using a plurality of beams, and
- transmitting (206) information indicative of the properties to a system performing a method of aggregating properties, the method of aggregating properties comprising receiving (221), from a second plurality of mobile devices, information indicative of properties of signals transmitted by the transmitter in a first cell using the plurality of beams, the properties being measured by the second plurality of mobile devices while in the serving area of at least one second cell, aggregating (222) the properties measured by the second plurality of mobile devices, and transmitting (225) information indicative of the aggregated properties to a system performing a method of determining estimated degrees of interference and/or determining a set of beams.

24. A computer program or suite of computer programs comprising at least one software code portion or a computer program product storing at least one software code portion, the software code portion, when run on a computer system, being configured for performing the method of any one of claims 17 to 23.
